# EUROPEAN PATENT SPECIFICATION

(11) **EP 1 032 883 B1**
(45) Date of publication and mention of the grant of the patent: **16.08.2006**
(21) Application number: 98957839.8
(22) Date of filing: 12.11.1998
(51) Int. Cl.: G06T 3/00, G06T 1/60

(54) **DATA RESAMPLER FOR DATA PROCESSING SYSTEM**
WIEDERABTASTUNGSSYSTEM FÜR DATENVERARBEITUNG
REECHANTILLONEUR DE DONNEES POUR SYSTEME DE TRAITEMENT DE DONNEES

(30) Priority: 21.11.1997 US 66348 P; 19.02.1998 US 25938
(43) Date of publication of application: 06.09.2000
(73) Proprietor: Siemens Energy & Automation, Inc., Alpharetta, GA 30005 (US)
(72) Inventor: GREENBERG, Michael, P., Goffstown, NH 03045 (US); WILT, Michael, J., Windham, NH 03087 (US)
(74) Representative: Copp, David Christopher
(86) International application number: PCT/US1998/024063
(87) International publication number: WO 1999/027455

(56) References cited:
- US-A- 5 784 047
- PATENT ABSTRACTS OF JAPAN vol. 1996, no. 12, 26 December 1996 (1996-12-26) & JP 08 212357 A (MATSUSHITA ELECTRIC IND CO LTD), 20 August 1996 (1996-08-20) & US 5 889 526 A (HASHIMOTO TSUTOMU) 30 March 1999 (1999-03-30)

## Description

### FIELD OF THE INVENTION

This invention relates to data processing systems and more particularly, to a data resampler and data resampling method for a data processing system for processing a stream of data containing logically adjacent or related data samples such as in a machine vision system.

### BACKGROUND OF THE INVENTION

Machine vision systems (or other systems processing 2-dimensional data) often need to resample images to adjust scale, rotation, or other distortions in the original data prior to further processing. This operation is referred to herein as warping. For each point in the output image (rendered result array), several points in the source image are read and a computation performed to determine the value of the result. A well known computationally efficient technique uses bilinear interpolation for this purpose. This algorithm reads four neighboring samples surrounding the sub-sample location in the source image to be rendered (2x2 aperture). The hardware described is easily extended to higher-order interpolation kernel techniques which nonetheless fetch a fixed number of surrounding samples.

The location to be rendered may be determined by a number of well-known techniques. One technique suitable for efficient hardware implementation iteratively computes horizontal and vertical difference equations which cause the sampling point to move through the source image at successive sub-sample points. In the current embodiment, these difference equations compute a linear path. This is commonly known as a linear DDA (Digital Differential Analyzer). Various other techniques such as higher order DDAs or a data structure containing pre-computed sub-sample points to be rendered could also benefit from the techniques to be described.

Complex warping (e.g. mapping an annular ring to a rectangular image) using linear DDA hardware typically requires a large number of individual linear segments to be processed. Even a simple rotation requires a new DDA operation to be executed for each row of the output image. The need for the DDA hardware to be reinitialized frequently degrades the efficiency of operation.

A second problem occurs in the rendering process due to the nature of burst-mode memories (e.g. SDRAM, SGRAM). This is because all four neighboring pixels which must be fetched on each step do not generally lie on the same memory row. This can degrade performance as memory addressing repeatedly crosses (thrashes) memory row boundaries during the fetch process.

One example of a prior art method and apparatus for resampling and interpolating images is disclosed in JP 08 212 357 A in which a single mapping address generator generates coordinates of texture that are provided to an interpolator.

### SUMMARY OF THE INVENTION

Accordingly, the current invention addresses the speed problem of the prior art by making a continuous stream of new parameters available to the DDA hardware.

The current invention uses three mechanisms to address the memory thrashing problem. First, address and data caches are employed for re-using pixels which may already have been fetched in a previous step. Second, the invention exploits SDRAM/SGRAM architecture by placing odd and even image rows in opposite internal banks and pre-activating the next bank address to anticipate the next row address required. Third, the FIFO technique described in co-pending Patent No. 6,208,772 is extended to mitigate the address to data latency of the burst-mode memories.

### BRIEF DESCRIPTION OF THE FIGURES

Figures 1A and 1B are schematic diagrams which illustrate one example of a resampling process of the present invention;
Figure 2 is a simplified block diagram of the warper according to the present invention;
Figure 3A is a block diagram illustrating the addition of a data buffer to hold DDA parameters;
Figure 3B illustrates the double-buffering DDA parameter register circuit;
Figure 4 is a block diagram showing the addition of address and data caches;
Figure 5 is a schematic diagram showing the operation of the address cache feature of the present invention;
Figure 6 is a schematic diagram which illustrates some examples of cache operation; and
Figure 7 is a block diagram which illustrates the operation of the data cache.

### DETAILED DESCRIPTION OF THE PREFERRED EMBODIMENT

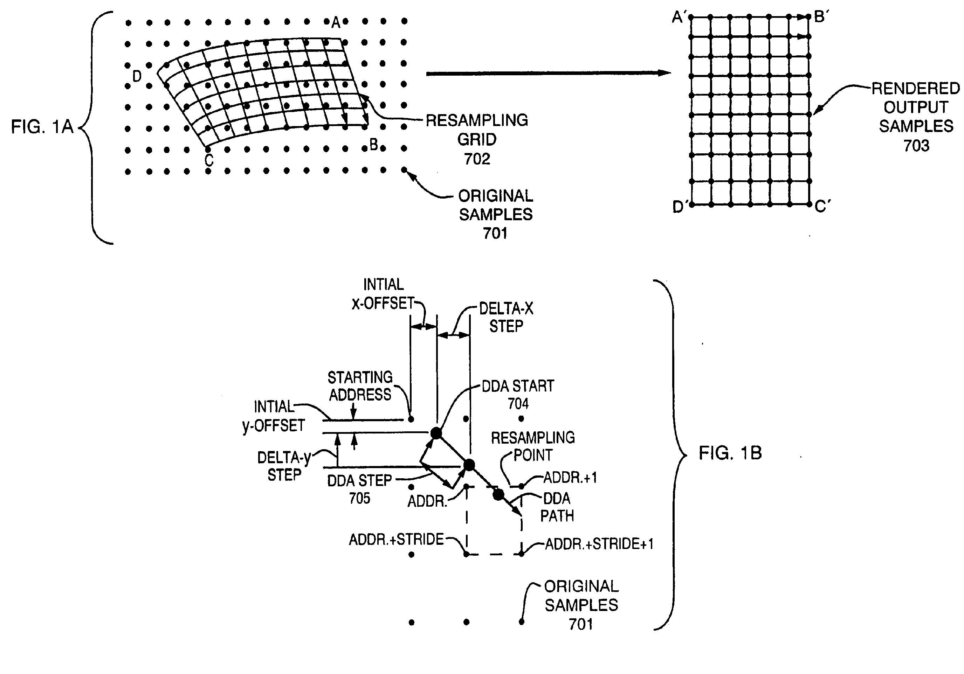

Figure 1A is an overview of a resampling process according to the present invention. A 2-dimensional array of adjacent image data samples 701 is stored in memory. Typically these are taken directly from the data source. The resampling grid 702 represents points at which samples are to be rendered. For each point in the resampling grid 702, a result is generated (rendered) and stored in the 2-dimensional rendered output sample array 703. In the current embodiment, for computational efficiency, the resampling grid or array 702 consists of a series of straight line segments. These segments can piecewise approximate any type of warp distortion. Each rendering sequence involves moving along one of these lines at equally spaced, arbitrary sized steps. Thus, in the illustration, moving along the six resampling grid steps from A to B generates the seven rendered output values from A' though B'.

Fig. 1B details the process of rendering one of the linear segments (e.g. A to B). The initial sampling point 704 (e.g. A) is represented as an initial whole pixel address in the original sample array 701, and x and y subpixel offsets from that address. For each DDA step 705, a new sampling point is computed by adding the delta-x and delta-y steps to the present x-y position with full subpixel precision.

Each sampling location can be expressed as a pair of mixed fractions for X and Y. The integer parts representing pixel address and the fractional parts representing subpixel fractions. Interpolation is required except when the sampling location is exactly at an original sample point (both fractional parts are zero). Bilinear interpolation involves fetching the four pixels surrounding the sampling point. Note that movement in the Y direction involves the "stride" constant (the distance between the rows in the original sample array 701. The rendered output result is computed by considering all four neighboring pixels and the inverse distance of the sampling point from each of the four original samples.

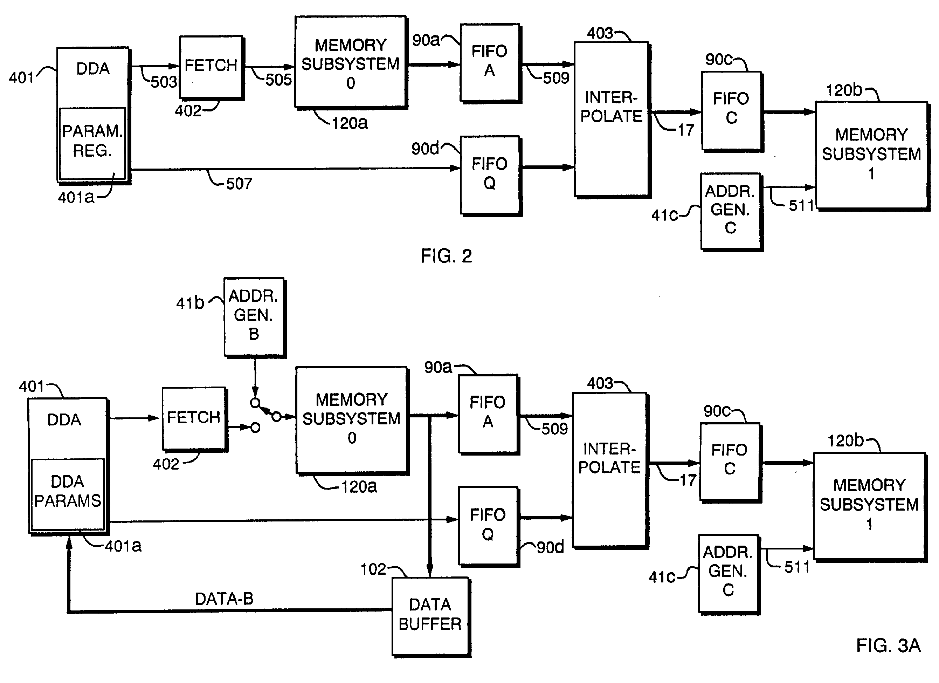

The DDA unit 401, Fig. 2, generates a corner address and a set of interpolation coefficients for each sample to be rendered. For example, a linear DDA requires the following parameters which are loaded into working parameter registers 401a:
1. Source starting address.
2. Source starting X and Y fractions.
3. Delta-X and delta-Y (slope of the DDA to be generated)
4. Clipping bounds (to supply default value when valid source address range is exceeded).
5. Number of points to render.

In the simple exemplary implementation shown, these parameters are loaded into DDA unit registers prior to each operation.

The DDA unit 401 generates an interpolation corner address 503. The fetch unit 402 uses the generated interpolation corner address 503 to generate four source addresses 505 of samples to be fetched from the source array via memory subsystem 0 120a. The DDA unit 401 also generates a set of interpolation fractions 507 (x and y fractions) for each point to be rendered. Because of memory read latency (as described elsewhere herein), there is some delay before valid data is available. The interpolation fractions 507 are held in a first, first-in, first-out memory 90d (FIFO Q), permitting the DDA unit 401 and fetch unit 402 to continue to operate during the memory read latency period.

An interpolation unit 403 receives pixel data 509 from a second FIFO memory unit, FIFO A 90a and interpolation fractions 507 from FIFO Q 90d. The interpolation unit then computes the rendered result pixels, assembles them into memory words 17, and outputs the words to the destination memory subsystem 1 120b via a third FIFO memory unit, FIFO C 90c. The destination address 511 is supplied by address generator C 41c.

After each DDA rendering cycle, working parameter registers 401a must be reloaded. Host intervention would cause considerable overhead. Using the auto-sequencer (described in co-pending U. S. Patent No.

6,208,772) improves performance, but still requires flushing FIFO A 90a before and after each run and fetching auto-sequencer instructions and parameter sets from memory between runs. By pre-fetching large blocks of parameters into a data buffer 102 of Figure 3A, most of this overhead is avoided. In Figure 3A, DDA parameter sets are located in memory 0 120a along with the source image, but in general, they may be located in either memory. Fetching parameter sets into the data buffer 102 is a separate operation, occurring whenever the data buffer 102 is empty. During this operation, memory/parameter addresses 121 are supplied by address generator B 41b. In Figure 3A, a fourth FIFO memory unit which is part of data buffer 102, is also used to extend the capacity of the data buffer 102.

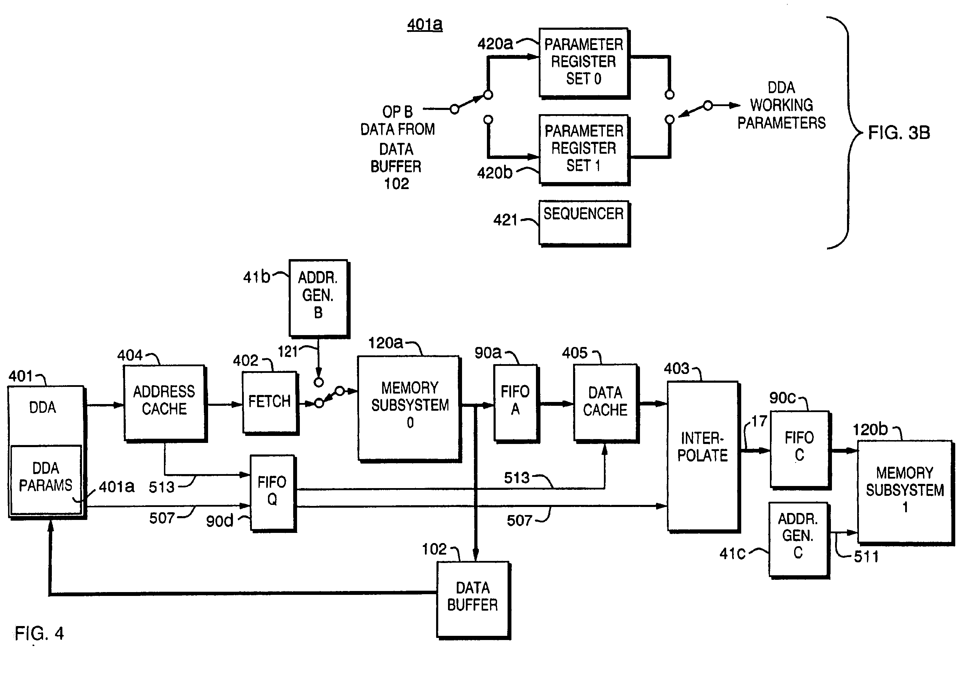

To further avoid overhead delays, parameter registers are double-buffered as shown in Figure 3B. Two sets of registers 420a-420b are used. During a warping operation, one set of registers 420a/420b supplies the working values to the DDA circuit while the other is available to be loaded from data buffer 102 under control of sequencer 421. In this way, no parameter loading delay need be encountered when one DDA run terminates and another starts.

To make more efficient use of memory bandwidth during the rendering operation, an address cache 404 and a data cache 405 are added as shown in Figure 4. The width of FIFO Q 90d is also increased to carry a data descriptor 513 along with each set of interpolation fractions 507.

In the current embodiment, the data cache 405 consists of two cache lines (register sets) each holding two four (4) pixel memory words 17. The contents of the data cache registers represent an 8x2 pixel neighborhood. The address cache 404 has two cache lines comprising upper and lower cache lines. Each cache line is comprised of two address registers. Each address register, when valid, holds the address of a word in source memory 120a. Data from the two words thus points to eventually become the contents of the corresponding data cache 405 cache line. Although the present invention is described in connection with four (4) pixel words per memory word, this is not a limitation of the present invention as it also applies to wider or narrower memory words as will be appreciated by those skilled in the art.

Address cache 404 computes the four required addresses based on the incoming DDA corner address. It then compares these with all valid addresses currently resident in the address cache 404 and determines if any new data needs to be fetched from memory. It then instructs the fetch unit 402 to supply the required addresses to the source memory subsystem 120a. At the same time, it encodes and outputs a data descriptor 513 containing instructions for the data cache unit 405. The data descriptor specifies how the data cache 405 is to update its registers from FIFO A 90a if required, and how to form the required interpolation neighborhood once its registers contain valid data.

In the current embodiment, two memory words are always fetched whenever a cache line is re-filled, exploiting the efficient burst mode capability of SDRAM/SGRAM. The data descriptor 513 can also instruct the data cache 405 to load the upper cache line from the lower cache line or vice versa. Note also that the address cache 404 can reload the upper from the lower address cache line or vice versa as the addresses are processed.

Once the data cache 405 contains valid data, the required four pixels are supplied to the interpolation unit 403 using information from the data descriptor 513, along with the interpolation fractions 507 from FIFO Q 90d.

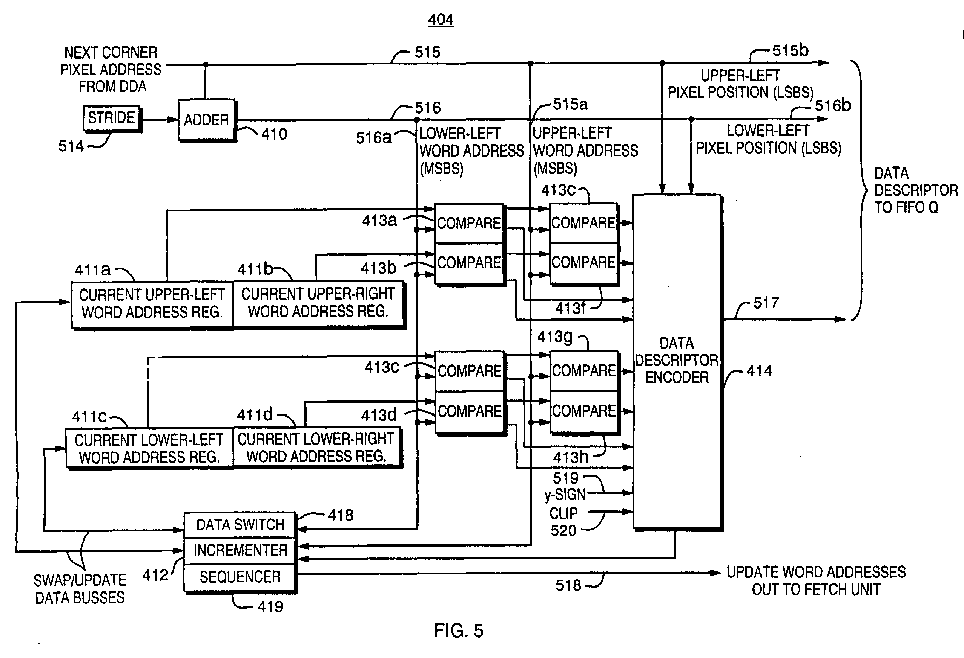

The operation of the address cache 404 is detailed in Figure 5. The lower-left pixel address 516 is generated by adding the stride 514 to the corner pixel (upper-left) address 515 using adder 410. The most significant bits of these addresses represent a memory address containing the desired pixel. In the present example, there are four pixels in each memory word 17, and there are 26 bits of pixel address corresponding to 24 bits of memory address 515a and 516a and 2 bits of pixel position 515b and 516b within the memory word.

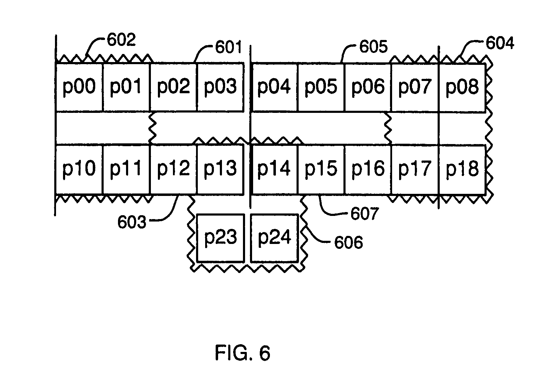

There are four working address registers 411a-411d organized as two address cache lines. The first line comprises registers 411a and 411b. The second cache line includes registers 411c and 411d. In each line, one register (for example the left registers) 411a and 411c holds the address of the memory word containing the left pixel, while one register (for example the right registers) 411b and 411d holds the address of the next word. This means that both the left and right pixels are contained within the two words pointed to by the left and right address registers. This is illustrated by the examples in Figure 6.

The four memory locations addressed hold the pixel values shown. The p00 2x2 neighborhood 602 lies entirely within the cache. When the p07 neighborhood 604 is to be processed both cache lines must be updated. In the current embodiment, four new memory words are fetched in this case. Note that words 01 605 and 11, 607 could have been reused. This was not deemed necessary due to the high SDRAM/SGRAM burst bandwidth. When the p13 neighborhood 606 is to be processed, the lower cache line (words 10, 603 and 11, 607), are transferred to the upper cache line (words 00, 601 and 01 605), and the lower registers 411c and 411d are updated from the incoming lower-left word address 516a. Whenever a cache line is updated, the incrementer 412 generates the right address or addresses.

On the start of a warp operation, all four working registers' contents are invalid until loaded on the first address step. The memory addresses 515a and 516a of the upper-left 515 and lower-left 516 pixels are compared with all four working address registers 411a-411d contents when valid, using comparators 413a-413h. The results of these comparisons, plus the location of the pixel within the word, determine the actions required to update the address and data caches. Data descriptor encoder 414 generates a data cache update descriptor 517, which enters FIFO Q (90d of Figure 3A) along with the pixel location bits 515b and 516b as data descriptor 513, along with the interpolation fractions 507. The encoder 414 also instructs the incrementer 412 to update the address cache working registers 411a-411d using data switch 418 and sequencer 419. The sequencer 417 also requests words to be fetched from memory via the fetch unit 402, via a fetch signal 518.

The data descriptor 517 includes the sign of the vertical DDA (y-sign) 519, Fig. 5. This determines the order in which the fetch unit will request and the data cache will receive data from the upper and lower memory rows. The y-sign 519 also instructs the source memory controller (40 in Figure 5 of co-pending US Patent

6,208,772) to precharge the alternate SDRAM/SGRAM alternate bank on the previous row address rather than the next row address when asserted. This strategy reduces memory latency whenever a cache line update occurs. The encoder 414 also receives a clip input signal 520 from the DDA unit 401. When this is asserted, the DDA unit has determined that at least one source address is invalid. In this case, no data is fetched and the data cache forwards the signal to the interpolate unit 403 which outputs a default value to the result-C bus 17 for the corresponding pixel.

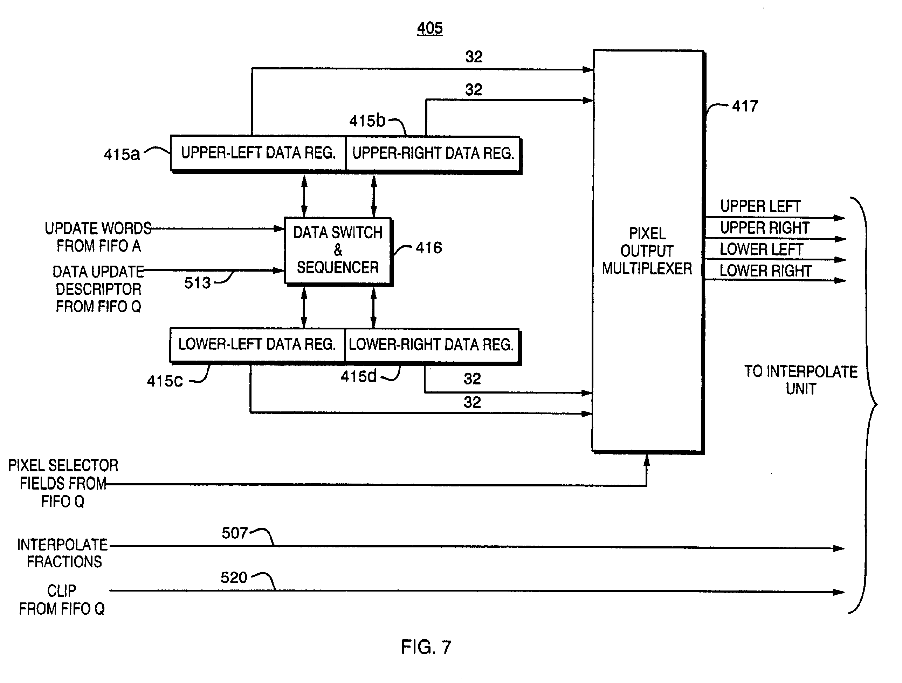

The data cache 405, Fig. 7, has four (4) working registers 415a-415d each holding a memory word. Pairs of registers, 415a/415b and 415c/415d left and right, each comprise a data cache line holding eight pixels. The data switch and sequencer 416 updates working registers 415a-415d based on the data descriptor 513 from the output of FIFO Q 90d. When working register update is required, data is taken from FIFO A 90a. The data switch 416 can also move data between the upper and lower cache lines when required. The data descriptor 513 insures that the sequence of updates corresponds to the sequence of addresses issued to the source data memory subsystem 120a.

Pixel output multiplexer 417 selects the four pixels forming the required 2x2 neighborhood for interpolation using the corresponding FIFO Q pixel select fields. The corresponding interpolation fractions 507 from the FIFO Q are passed directly to the interpolation unit 403 which forms four coefficients based on the interpolation fractions; multiplies each by the corresponding pixel value to provide four products; sums the four products; and normalizes the result, producing the rendered pixel value. When clip 520 from the DDA 401 is asserted, the interpolation unit outputs a default value. The rendered pixel output values are packed into a memory word and output to the destination bus. In the current embodiment, four pixels are rendered for each memory word written out.

Accordingly, the present invention provides a novel data resampler for processing logically adjacent data samples.

Modifications and substitutions by one of ordinary skill in the art are considered to be within the scope of the present invention which is not to be limited except by the claims which follow.

## Claims

1. A data resampler for a data processing system processing logically adjacent data samples (701), said data sampler comprising:
a memory subsystem (120a), for storing at least a first plurality of data samples (701) to be rendered;
a digital differential analyzer (DDA) (401), responsive to DDA parameter sets, for generating an interpolation corner address (503) for said plurality of data samples to be rendered, and for also generating a set of interpolation fractions (507);
a fetch unit (402), for receiving the generated interpolation corner address (503) and for generating four source addresses (505) of data samples to be fetched from said memory subsystem (120a);
**characterised in that** said data sampler comprises:
a first FIFO memory (90d), for holding said interpolation fractions (507) and for permitting said DDA (401) and fetch unit (402) to continue to operate during memory read latency periods;
a second FIFO memory (90a), for holding pixel data;
a first address generator (41 c);
an address cache (404) and a data cache (405), wherein said data cache (405) comprises at least two cache lines each holding two memory words and wherein said address cache comprises at least two cache lines each comprised of two address registers, each address register for holding an address of a word (17) in said memory subsystem (120a); and
and an interpolation unit (403), for receiving pixel data (509) from said second FIFO memory (90a) and interpolation fractions (507) from said first FIFO memory (90d), for computing rendered result pixels (703), for assembling said result pixels into memory words (17), and for outputting said memory words (17) to a destination memory address (511) supplied by said address generator (41 c) in a destination memory subsystem (120b) via a third FIFO (90c).

2. The data resampler as claimed in claim 1 further including:
a data buffer (102), for holding DDA parameter sets in DDA parameter registers (401 a), said DDA parameter sets fetched from said memory subsystem (120a) whenever said data buffer (102) is empty; and
a second address generator, for supplying memory subsystem addresses to said memory subsystem (120a) for DDA parameter sets to be retrieved from said memory subsystem (120a).

3. The data resampler as claimed in claim 2, further including a fourth FIFO to extend the capacity of said data buffer (102), and wherein said DDA parameter registers (401 a) are double-buffered and comprise two sets of registers (420a 420b), a first set of which supplies working values to said DDA (401) and a second set of which is available to be loaded from said fourth FIFO under control of a sequencer (421) in order to eliminate parameter loading delay.

4. The data resampler as claimed in any preceding claim, wherein the width of said first FIFO (90d) is increased to carry a data descriptor (513) along with each set of interpolation fractions (507).

5. The data resampler as claimed in any preceding claim, further comprising an adder (410) for generating a lower-left pixel address (516) from an upper-left pixel address (515) by adding a stride (514) to said upper-left pixel address (515).

6. The data resampler as claimed in any preceding claim, further comprising four working address registers (411a - 411d) organized as two address cache lines each having left and right registers for holding addresses of memory words (17), wherein in each line the left register holds the address of the memory word (17) containing the left pixel, and the right register holds the address of the next word (17).

7. The data resampler as claimed in claim 6 further comprising an incrementer (412) for generating correct memory addresses whenever a cache line is updated.

8. The data resampler as claimed in claim 7 further comprising at least one comparator (413a - 413h) for comparing the memory addresses of the upper-left (515) and lower-left (516) pixels with the contents of all four working address registers (411a - 411d).

9. The data resampler as claimed in claim 8, further comprising a data descriptor encoder (414) and a data switch (418) and sequencer (419), said descriptor encoder (414) for generating a data cache update descriptor (517) and for instructing said data switch and sequencer to update the address working registers (441 a - 411d) and to request words to be fetched from memory via said fetch unit (402).

10. The data resampler as claimed in claim 1, wherein said data cache (405) comprises four working registers (441 a - 411 d) each holding a memory word (17), said registers arranged in left and right pairs, each pair comprising a data cache line holding twice the number of pixels per memory word.

11. The data resampler as claimed in claim 10, further including a second data switch and sequencer, which updates working registers based on a data descriptor (513) from the output of said first FIFO (90d) and a pixel output multiplexer.

12. A method of resampling data for a data processing system for logically adjacent data samples, said method comprising:
storing at least a first plurality of data samples to be rendered in a memory subsystem (120a);
generating, in response to digital differential analyzer (DDA) parameter sets stored in DDA parameter set registers (401 a), an interpolation corner address (503) for a sample to be rendered and a set of interpolation fractions using a digital differential analyzer (DDA) (401);
receiving the generated interpolation corner address (503) and responsive to said received interpolation corner address, generating four source addresses (505) of samples to be fetched from said memory subsystem (120a) using an address cache (404);
comparing said four source addresses (505) with all addresses resident in four working address registers (411 a-411d) of said address cache (404);
**characterized in that** the method comprises
determining if any new address needs to be fetched from said memory subsystem (120a) and fetching any required address from said memory subsystem;
holding said interpolation fractions (507) in a first FIFO memory (90d) to permit said DDA (401) to continue to operate during memory read latency periods;
holding pixel data in a second FIFO (90a); and
receiving pixel data from said second FIFO (90a) and interpolation fractions (507) from said first FIFO (90d) and computing rendered result pixels (703), assembling said result pixels into memory words (17), outputting said words (17) to a destination memory address (511) supplied by an address generator (41c) in a destination memory subsystem (120d) via a third FIFO (90c), and reloading DDA parameter set registers (401 a) after each DDA rendering cycle.

13. The method of resampling data as claimed in claim 12, further comprising pre-fetching blocks of parameters into DDA parameter registers (401 c) of a data buffer (102).

14. The method of resampling data as claimed in claim 13, further comprising double-buffering (102) said parameter registers (401 a) into two sets of registers (420a, 420b), a first register set of said two sets of registers of which supplies working values to said DDA (401), and a second register set of which is available to be loaded from said fourth FIFO under control of a sequencer (421) in order to eliminate parameter loading delay.

15. The method of resampling data as claimed in claim 14, further comprising providing a data cache having two cache lines and holding two memory words (17) in each of said cache lines.

16. The method of resampling data as claimed in claim 12 further comprising encoding and outputting a data descriptor (513), which specifies how the data cache is to update its registers from said second FIFO (90a).

17. The method of resampling data as claimed in claim 16, further comprising fetching two memory words whenever a cache line is re-filled.

18. The method of resampling data as claimed in claim 17, wherein said data descriptor (513) also instructs said data cache to load an upper cache line from a lower cache line.

19. The method of resampling data as claimed in claim 17, wherein said data descriptor (513) also instructs said data cache to load a lower cache line from a upper cache line.

20. The method of resampling data as claimed in claim 12, wherein a lower-left pixel address (516) is generated by adding a stride (514) to an upper-left pixel address (515) using an adder (410).

21. The method of resampling data as claimed in claim 12, further comprising organizing four working address registers (411a - 411d) as two address cache lines each containing left and right address registers holding the address of the memory word (17) containing the left pixel in the left register and holding the address of the next word in the right address register.

22. The method of resampling data as claimed in claim 21, further comprising generating correct memory addresses whenever a cache line is updated using an incrementer (412).

23. The method of resampling data as claimed in claim 22, further comprising comparing the memory address of the upper-left (515) and lower-left (516) pixels with the contents of all four working address registers (411a - 411d).

24. The method of resampling data as claimed in claim 23, further comprising generating a data cache update descriptor (517) and instructing a data switch (418) and sequencer (419) to update the address working registers (411a - 411 d) and requesting words to be fetched from memory.

## Patentansprüche

1. Datenwiederabtaster für ein Datenverarbeitungssystem, das logisch benachbarte Datenabtastwerte (701) verarbeitet, wobei der Datenabtaster folgendes umfaßt:
ein Speichersubsystem (120a) zum Speichern mindestens einer Vielzahl von wiederzugebenden Datenabtastwerten (701);
einen digitalen Differenzanalysator (DDA) (401), der auf DDA-Parametermengen reagiert, zum Erzeugen einer Interpolationseckenadresse (503) für die wiederzugebende Vielzahl von Datenabtastwerten und außerdem zum Erzeugen einer Menge von Interpolationsbrüchen (507);
eine Abrufeinheit (402) zum Empfangen der erzeugten Interpolationseckenadresse (503) und zum Erzeugen von vier Quellenadressen (505) von aus dem Speichersubsystem (120a) abzurufenden Datenabtastwerten;
**dadurch gekennzeichnet, daß** der Datenabtaster folgendes umfaßt:
einen ersten FIFO-Speicher (90d) zum Halten der Interpolationsbrüche (507) und zur Ermöglichung eines fortgesetzten Betriebes des DDA (401) und der Abrufeinheit (402) während Speicherleselatenzperioden;
einen zweiten FIFO-Speicher (90a) zum Halten von Pixeldaten;
einen ersten Adressengenerator (41c);
einen Adressen-Cache (404) und einen Daten-Cache (405), wobei der Daten-Cache (405) mindestens zwei Cache-Linien umfaßt, die jeweils zwei Speicherwörter halten, und wobei der Adressen-Cache mindestens zwei Cache-Linien umfaßt, die jeweils aus zwei Adressenregistern bestehen, wobei jedes Adressenregister zum Halten einer Adresse eines Worts (17) in dem Speichersubsystem (120a) dient; und
eine Interpolationseinheit (403) zum Empfangen von Pixeldaten (509) aus dem zweiten FIFO-Speicher (90a) und von Interpolationsbrüchen (507) aus dem ersten FIFO-Speicher (90d) zum Berechnen wiedergegebener Ergebnispixel (703), zum Zusammenstellen der Ergebnispixel zu Speicherwörtern (17) und zum Ausgeben der Speicherwörter (17) an eine Zielspeicheradresse (511), die von dem Adressengenerator (41c) in einem Zielspeichersubsystem (120b) über einen dritten FIFO (90c) zugeführt wird.

2. Datenwiederabtaster nach Anspruch 1, ferner umfassend:
einen Datenpuffer (102) zum Halten von DDA-Parametermengen in DDA-Parameterregistern (401a), wobei die DDA-Parametermengen immer dann, wenn der Datenpuffer (102) leer ist, aus dem Speichersubsystem (120a) abgerufen werden; und
einen zweiten Adressengenerator zum Liefern von Speichersubsystemadressen an das Speichersubsystem (120a) für aus dem Speichersubsystem (120a) abzurufende DDA-Parametermengen.

3. Datenwiederabtaster nach Anspruch 2, ferner mit einem vierten FIFO zum Erweitern der Kapazität des Datenpuffers (102) und wobei die DDA-Parameterregister (401a) doppelt gepuffert sind und zwei Mengen von Registern (420a, 420b) umfassen, wobei eine erste Menge davon Arbeitswerte an den DDA (401) liefert und eine zweite Menge davon für ein Laden aus dem vierten FIFO unter der Kontrolle eines Sequenzers (421) verfügbar ist, um Parameterladeverzögerungen zu beseitigen.

4. Datenwiederabtaster nach einem der vorhergehenden Ansprüche, wobei die Breite des ersten FIFO (90d) vergrößert ist, um zusammen mit jeder Menge von Interpolationsbrtichen (507) einen Datendeskriptor (513) zu führen.

5. Datenwiederabtaster nach einem der vorhergehenden Ansprüche, ferner mit einem Addierer (410) zum Erzeugen einer unteren linken Pixeladresse (516) aus einer oberen linken Pixeladresse (515) durch Addieren eines Schritts (514) zu der oberen linken Pixeladresse (515).

6. Datenwiederabtaster nach einem der vorhergehenden Ansprüche, ferner mit vier Arbeitsadressenregistern (411a - 411d), die als zwei Addressencache-Linien jeweils mit einem linken und einem rechten Register zum Halten von Adressen von Speicherwörtern (17) organisiert sind, wobei in jeder Linie das linke Register die Adresse des Speicherworts (17), das das linke Pixel enthält und das rechte Register die Adresse des nächsten Worts (17) enthält.

7. Datenwiederabtaster nach Anspruch 6, ferner mit einem Inkrementierer (412) zum Erzeugen von korrekten Speicheradressen immer dann, wenn eine Cache-Linie aktualisiert wird.

8. Datenwiederabtaster nach Anspruch 7, ferner mit mindestens einem Komparator (413a - 413h) zum Vergleichen der Speicheradressen des oberen linken (515) und des unteren linken (516) Pixel mit dem Inhalt aller vier Arbeitsadressenregister (411a - 411d) .

9. Datenwiederabtaster nach Anspruch 8, ferner mit einem Datendeskriptorcodierer (414) und einem Datenschalter (418) und -sequenzer (419), wobei der Deskriptorcodierer (414) zum Erzeugen eines Daten-Cache-Aktualisierungsdeskriptors (517) und zum Anweisen des Datenschalters und -sequenzers zum Aktualisieren der Adressenarbeitsregister (441a - 411d) dient, und zum Anfordern von aus dem Speicher über die Abrufeinheit (402) abzurufenden Wörtern.

10. Datenwiederabtaster nach Anspruch 1, wobei der Daten-Cache (405) vier Arbeitsregister (441a - 411d) umfaßt, die jeweils ein Speicherwort (17) halten, wobei die Register zu linken und rechten Paaren angeordnet sind, wobei jedes Paar eine Daten-Cache-Linie umfaßt, die zweimal die Anzahl von Pixeln pro Speicherwort hält.

11. Datenwiederabtaster nach Anspruch 10, ferner mit einem zweiten Datenschalter und -sequenzer, der Arbeitsregister auf der Basis eines Datendeskriptors (513) aus der Ausgabe des ersten FIFO (90d) und eines Pixelausgabemultiplexers aktualisiert.

12. Verfahren zum Wiederabtasten von Daten für ein Datenverarbeitungssystem für logisch benachbarte Datenabtastwerte, wobei das Verfahren die folgenden Schritte umfaßt:
Speichern mindestens einer ersten Vielzahl von wiederzugebenden Datenabtastwerten in einem Speichersubsystem (120a);
als Reaktion auf in DDA-Parametermengenregistern (401a) gespeicherten Parametermengen eines digitalen Differenz-Analysators (DDA), Erzeugen einer Interpolationseckenadresse (503) für einen wiederzugebenden Abtastwert und einer Menge von Interpolationsbrüchen unter Verwendung eines digitalen Differenz-Analysators (DDA) (401);
Empfangen der erzeugten Interpolationseckenadresse (503), und als Reaktion auf die empfangene Interpolationseckenadresse, Erzeugen von vier Quellenadressen (505) von aus dem Speichersubsystem (120a) abzurufenden Abtastwerten unter Verwendung eines Adressen-Cache (404);
Vergleichen der vier Quellenadressen (505) mit allen in vier Arbeitsadressenregistern (411a- 411d) des Adressen-Cache (404) residenten Adressen;
**dadurch gekennzeichnet, daß** das Verfahren die folgenden Schritte umfaßt:
Bestimmen, ob eine etwaige neue Adresse aus dem Speichersubsystem (120a) abgerufen werden muß, und Abrufen einer etwaigen erforderlichen Adresse aus dem Speichersubsystem;
Halten der Interpolationsbrüche (507) in einem ersten FIFO-Speicher (90d), um es dem DDA (401) zu ermöglichen, während Speicherleselatenzperioden weiter zu arbeiten;
Halten von Pixeldaten in einem zweiten FIFO (90a); und
Empfangen von Pixeldaten aus dem zweiten FIFO (90a) und von Interpolationsbrüchen (507) aus dem ersten FIFO (90d) und Berechnen wiedergegebener Ergebnispixel (703), Zusammenstellen der Ergebnispixel in Speicherwörter (17), Ausgeben der Wörter (17) an eine Zielspeicheradresse (511), die von einem Adressengenerator (41c) in einem Zielspeichersubsystem (120d) über ein drittes FIFO (90c) zugeführt wird, und Wiederladen von DDA-Parametermengenregistern (401a) nach jedem DDA-Wiedergabezyklus.

13. Verfahren zum Wiederabtasten von Daten nach Anspruch 12, ferner mit dem Schritt des Vorabrufens von Blöcken von Parametern in DDA-Parameterregistern (401c) eines Datenpuffers (102).

14. Verfahren zum Wiederabtasten von Daten nach Anspruch 13, ferner mit dem Schritt des Doppelpufferns (102) der Parameterregister (401a) in zwei Mengen von Registern (420a, 420b), wobei eine erste Registermenge der beiden Mengen von Registern davon Arbeitswerte an den DDA (401) liefert und eine zweite Registermenge davon für ein Laden aus dem vierten FIFO unter der Kontrolle eines Sequenzers (421) verfügbar ist, um Parameterladeverzögerungen zu beseitigen.

15. Verfahren zum Wiederabtasten von Daten nach Anspruch 14, ferner mit dem Schritt des Bereitstellens eines Daten-Cache mit zwei Cache-Linien und des Haltens zweier Speicherwörter (17) in jeder der Cache-Linien.

16. Verfahren zum Wiederabtasten von Daten nach Anspruch 12, ferner mit dem Schritt des Codierens und Ausgebens eines Datendeskriptors (513), der spezifiziert, wie der Daten-Cache seine Register aus dem zweiten FIFO (90a) aktualisieren soll.

17. Verfahren zum Wiederabtasten von Daten nach Anspruch 16, ferner mit dem Schritt des Abrufens zweier Speicherwörter immer dann, wenn eine Cache-Linie wieder gefüllt wird.

18. Verfahren zum Wiederabtasten von Daten nach Anspruch 17, wobei der Datendeskriptor (513) außerdem den Daten-Cache anweist, eine obere Cache-Linie aus einer unteren Cache-Linie zu laden.

19. Verfahren zum Wiederabtasten von Daten nach Anspruch 17, wobei der Datendeskriptor (513) außerdem den Daten-Cache anweist, eine untere Cache-Linie aus einer oberen Cache-Linie zu laden.

20. Verfahren zum Wiederabtasten von Daten nach Anspruch 12, wobei durch Addieren eines Schritts (514) zu einer oberen linken Pixeladresse (515) unter Verwendung eines Addierers (410) eine untere linke Pixeladresse (516) erzeugt wird.

21. Verfahren zum Wiederabtasten von Daten nach Anspruch 12, ferner mit dem Schritt des Organisierens von vier Arbeitsadressenregistern (411a - 411d) als zwei Addressencache-Linien, die jeweils ein linkes und ein rechtes Adressenregister enthalten, die die Adresse des Speicherworts (17), das das linke Pixel enthält, in dem linken Register und die Adresse des nächsten Worts in dem rechten Adressenregister halten.

22. Verfahren zum Wiederabtasten von Daten nach Anspruch 21, ferner mit dem Schritt des Erzeugens korrekter Speicheradressen immer dann, wenn eine Cache-Linie aktualisiert wird, unter Verwendung eines Inkrementierers (412).

23. Verfahren zum Wiederabtasten von Daten nach Anspruch 22, ferner mit dem Schritt des Vergleichens der Speicheradresse des oberen linken (515) und des unteren linken (516) Pixels mit dem Inhalt aller vier Arbeitsadressenregister (411a - 411d).

24. Verfahren zum Wiederabtasten von Daten nach Anspruch 23, ferner mit dem Schritt des Erzeugens eines Daten-Cache-Aktualisierungsdeskriptors (517) und des Anweisens eines Datenschalters (418) und - sequenzers (419), die Adressenarbeitsregister (411a - 411d) zu aktualisieren, und des Anforderns von aus dem Speicher abzurufenden Wörtern.

## Revendications

1. Ré-échantillonneur de données pour un système de traitement de données traitant des échantillons de données logiquement adjacents (701), ledit échantillonneur de données comprenant :
un sous-système de mémoire (120a), pour stocker au moins une première pluralité d'échantillons de données (701) à rendre ;
un analyseur numérique différentiel (DDA) (401), sensible à des ensembles de paramètres DDA, pour générer une adresse d'angle d'interpolation (503) pour ladite pluralité d'échantillons de données à rendre, et pour générer aussi un ensemble de fractions d'interpolation (507) ;
une unité de recherche (402), pour recevoir l'adresse d'angle d'interpolation générée (503) et pour générer quatre adresses sources (505) d'échantillons de données à chercher à partir dudit sous-système de mémoire (120a);
**caractérisé en ce que** ledit échantillonneur de données comprend :
une première mémoire FIFO (90d), pour maintenir lesdites fractions d'interpolation (507) et pour permettre audit DDA (401) et à ladite unité de recherche (402) de continuer à fonctionner pendant des périodes de latence de lecture de mémoire ;
une seconde mémoire FIFO (90a), pour maintenir des données de pixel ;
un premier générateur d'adresse (41c) ;
une mémoire cache d'adresse (404) et une mémoire cache de données (405), dans lequel ladite mémoire cache de données (405) comprend au moins deux lignes de mémoire cache contenant chacune deux mots de mémoire et dans lequel ladite mémoire cache d'adresse comprend au moins deux lignes de mémoire cache chacune composée de deux registres d'adresse, chaque registre d'adresse pour maintenir une adresse d'un mot (17) dans ledit sous-système de mémoire (120a) ; et
une unité d'interpolation (403), pour recevoir des données de pixel (509) à partir de ladite seconde mémoire FIFO (90a) et des fractions d'interpolation (507) à partir de ladite première mémoire FIFO (90d), pour calculer des pixels de résultat rendus (703), pour assembler lesdits pixels de résultat dans des mots de mémoire (17), et pour fournir lesdits mots de mémoire (17) à une adresse de mémoire de destination (511) fournie par ledit générateur d'adresse (41 c) dans un sous-système de mémoire de destination (120b) via une troisième mémoire FIFO (90c).

2. Ré-échantillonneur de données selon la revendication 1 comprenant en outre :
un tampon de données (102), pour maintenir des ensembles de paramètres DDA dans des registres de paramètre DDA (401a), lesdits ensembles de paramètres DDA cherchés à partir dudit sous-système de mémoire (120a) chaque fois que ledit tampon de données (102) est vide ; et
un second générateur d'adresse, pour fournir des adresses de sous-système de mémoire audit sous-système de mémoire (120a) pour des ensembles de paramètres DDA à récupérer à partir du sous-système de mémoire (120a).

3. Ré-échantillonneur de données selon la revendication 2, comprenant en outre une quatrième mémoire FIFO pour étendre la capacité dudit tampon de données (102), et dans lequel lesdits registres de paramètre DDA (401 a) sont doublement tamponnés et comprennent deux ensembles de registres (420a, 420b), dont un premier ensemble fournit des valeurs de travail audit DDA (401) et dont un second ensemble est disponible pour être chargé à partir de la quatrième mémoire FIFO sous la commande d'un séquenceur (421) afin d'éliminer des retards de chargement de paramètre.

4. Ré-échantillonneur de données selon l'une quelconque des revendications précédentes, dans lequel la largeur de ladite première mémoire FIFO (90d) est augmentée pour comporter un descripteur de données (513) avec chaque ensemble de fractions d'interpolation (507).

5. Ré-échantillonneur de données selon l'une quelconque des revendications précédentes, comprenant en outre un additionneur (410) pour générer une adresse de pixel inférieur gauche (516) à partir d'une adresse de pixel supérieur gauche (515) en ajoutant un grand pas (514) à ladite adresse de pixel supérieur gauche (515).

6. Ré-échantillonneur de données selon l'une quelconque des revendications précédentes, comprenant en outre quatre registres d'adresse de travail (411a à 411d) organisés comme deux lignes d'adresse de mémoire cache chacune ayant des registres gauche et droit pour maintenir des adresses de mots de mémoire (17), dans lesquelles dans chaque ligne le registre gauche garde l'adresse du mot de mémoire (17) contenant le pixel gauche, et le registre droit maintient l'adresse du mot suivant (17).

7. Ré-échantillonneur de données selon la revendication 6 comprenant en outre un incrémenteur (412) pour générer des adresses de mémoire correctes chaque fois qu'une ligne de mémoire cache est mise à jour.

8. Ré-échantillonneur de données selon la revendication 7 comprenant en outre au moins un comparateur (413a à 413h) pour comparer les adresses de mémoire des pixels supérieurs gauches (515) et inférieurs gauches (516) avec les contenus de tous les quatre registres d'adresse de travail (411a à 411d).

9. Ré-échantillonneur de données selon la revendication 8, comprenant en outre un codeur de descripteur de données (414) et un commutateur de données (418) et un séquenceur (419), ledit codeur de descripteur (414) pour générer un descripteur de mise à jour de mémoire cache de données (517) et pour donner l'instruction audit commutateur de données et au séquenceur de mettre à jour les registres de travail d'adresse (441a a à 41 d) et pour demander de rechercher des mots à partir de la mémoire via ladite unité de recherche (402),

10. Ré-échantillonneur de données selon la revendication 1, dans lequel ladite mémoire cache de données (405) comprend quatre registres de travail (441a à 411d) chacun contenant un mot de mémoire (17), lesdits registres disposés dans des paires gauche et droite, chaque paire comprenant une ligne de mémoire cache de données contenant deux fois le nombre de pixels par mot de mémoire.

11. Ré-échantillonneur de données selon la revendication 10, comprenant en outre un second commutateur de données et un séquenceur, qui met à jour des registres de travail sur la base d'un descripteur de données (513) à partir de la sortie de ladite première mémoire FIFO (90d) et un multiplexeur de sortie de pixel.

12. Procédé de ré-échantillonnage des données pour un système de traitement de données pour des échantillons des données logiquement adjacentes, ledit procédé comprenant :
le stockage d'au moins une première pluralité d'échantillons de données à rendre dans un sous-système de mémoire (120a) ;
la génération, en réponse à des ensembles de paramètres d'analyseur différentiel numérique (DDA) stockés dans des registres d'ensemble de paramètres DDA (401 a), une adresse d'angle d'interpolation (503) pour un échantillon à rendre et un ensemble de fractions d'interpolation utilisant un analyseur différentiel numérique (DDA) (401) ;
la réception de l'adresse d'angle d'interpolation générée (503) et en réponse à ladite adresse d'angle d'interpolation reçue, génération de quatre adresses sources (505) des échantillons à chercher à partir dudit sous-système de mémoire (120a) en utilisant une mémoire cache d'adresse (404);
la comparaison desdites quatre adresses sources (505) avec toutes les adresses résidant dans quatre registres d'adresse de travail (411a à 411d) de ladite mémoire cache d'adresse (404) ;
**caractérisé en ce que** le procédé comprend
la détermination si une nouvelle adresse quelconque a besoin d'être recherchée à partir dudit sous-système de mémoire (120a) et recherche d'une adresse requise quelconque à partir dudit sous-système de mémoire ;
le maintien desdites fractions d'interpolation (507) dans une première mémoire FIFO (90d) pour permettre audit DDA (401) de continuer à fonctionner pendant des périodes de latence de lecture de mémoire ;
le maintien des données de pixel dans une seconde mémoire FIFO (90a) ; et
la réception de données de pixel à partir de ladite seconde mémoire FIFO (90a) et des fractions d'interpolation (507) à partir de ladite première mémoire FIFO (90d) et le calcul des pixels de résultat rendus (703), l'assemblage desdits pixels de résultat dans des mots de mémoire (17), la fourniture desdits mots (17) à une adresse de mémoire de destination (511) fournie par un générateur d'adresse (41c) dans un sous-système de mémoire de destination (120d) via une troisième mémoire FIFO (90c), et le rechargement des registres d'ensemble de paramètres DDA (401a) après chaque cycle de restitution DDA.

13. Procédé de ré-échantillonnage de données selon la revendication 12, comprenant en outre des blocs de pré-recherche des paramètres dans des registres de paramètre DDA (401c) d'un tampon de données (102).

14. Procédé de ré-échantillonnage de données selon la revendication 13, comprenant en outre un tampon double (102) desdits registres de paramètre (401a) dans deux ensembles de registres (420a, 420b), dont un premier ensemble de registre desdits deux ensembles de registres fournit des valeurs de travail audit DDA (401), et dont un second ensemble de registre est disponible pour être chargé à partir de la quatrième mémoire FIFO sous la commande d'un séquenceur (421) afin d'éliminer un retard de chargement de paramètre.

15. Procédé de ré-échantillonnage de données selon la revendication 14, comprenant en outre la fourniture d'une mémoire cache de données ayant deux lignes de mémoire cache et le maintient de deux mots de mémoire (17) dans chacune desdites lignes de mémoire cache.

16. Procédé de re-échantillonnage de données selon la revendication 12 comprenant en outre le codage et la fourniture d'un descripteur de données (513), qui spécifie comment la mémoire cache de données est pour mettre à jour ses registres à partir de ladite seconde mémoire FIFO (90a).

17. Procédé de re-échantillonnage de données selon la revendication 16, comprenant en outre la recherche de deux mots de mémoire chaque fois qu'une ligne de mémoire cache est re-remplie.

18. Procédé de re-échantillonnage de données selon la revendication 17, dans lequel ledit descripteur de données (513) donne aussi l'instruction à ladite mémoire cache de données de charger une ligne de mémoire cache supérieure à partir d'une ligne de mémoire cache inférieure.

19. Procédé de re-échantillonnage de données selon la revendication 17, dans lequel ledit descripteur de données (513) donne aussi l'instruction à ladite mémoire cache de données de charger une ligne de mémoire cache inférieure à partir d'une ligne de mémoire cache supérieure.

20. Procédé de re-échantillonnage de données selon la revendication 12, dans lequel une adresse de pixel inférieur gauche (516) est générée en ajoutant un grand pas (514) à une adresse de pixel supérieur gauche (515) en utilisant un additionneur (410).

21. Procédé de re-échantillonnage de données selon la revendication 12, comprenant en outre l'organisation de quatre registres d'adresse de travail (411a à 411d) comme deux lignes de mémoire cache d'adresse chacune contenant des registres d'adresse gauche et droit maintenant l'adresse du mot de mémoire (17) contenant le pixel gauche dans le registre inférieur et maintenant l'adresse du mot suivant dans le registre d'adresse droit.

22. Procédé de ré-échantillonnage de données selon la revendication 21, comprenant en outre la génération des adresses de mémoire correctes chaque fois qu'une ligne de mémoire cache est mise à jour en utilisant un incrémenteur (412).

23. Procédé de ré-échantillonnage de données selon la revendication 22, comprenant en outre la comparaison de l'adresse de mémoire des pixels supérieurs gauches (515) et inférieurs gauches (516) avec les contenus de tous les quatre registres d'adresse de travail (411a à 411d).

24. Procédé de re-échantillonnage de données selon la revendication 23, comprenant en outre la génération d'un descripteur de mise à jour de mémoire cache de données (517) et l'instruction à un commutateur de données (418) et un séquenceur (419) de mettre à jour les registres de travail d'adresse (411a à 411d) et de demande des mots à rechercher à partir de la mémoire.
